# FASCICULE DE BREVET EUROPEEN

(11) **EP 1 244 277 B1**
(45) Date de publication et mention de la délivrance du brevet: **27.08.2008**
(21) Numéro de dépôt: 02290670.5
(22) Date de dépôt: 18.03.2002
(51) Int. Cl.: H04M 1/03, H04R 1/28

(54) **Téléphone mains libres tolérant aux fuites**
Freisprechtelefongerät mit verbesserter Lecktoleranz
Handsfree phone with improved leak tolerance

(30) Priorité: 20.03.2001 FR 0103764
(43) Date de publication de la demande: 25.09.2002
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Dufosse, Stéphane, 95240 Cormeilles en Parisis (FR); Janaszek, Nicolas, 59194 Anhiers (FR)
(74) Mandataire: Feray, Valérie

(56) Documents cités:
- EP-A- 0 909 077
- WO-A-00/45615
- US-A- 4 086 445
- US-A- 5 790 679

## Description

L'invention porte sur un combiné téléphonique, et plus particulièrement un écouteur à fonctions multiples de combiné téléphonique, tolérant aux fuites et adapté à une utilisation mains libres.

Il est connu de l'état de la technique un téléphone mobile tel que le Alcatel One Touch Pocket (marques déposées) présentant un boîtier dans lequel est ménagée une cavité remplie d'air. Un écouteur et un micro sous forme de transducteurs sont placés dans cette cavité, sur une paroi du boîtier. Le transducteur de l'écouteur présente un diaphragme pour transformer un signal électrique en onde sonore. Des ouvertures sont ménagées dans le boîtier, au niveau du diaphragme du transducteur, par lesquelles les ondes sonores sont émises. Le diaphragme dispose d'un volume d'air sur sa face arrière pour se déplacer et émettre une onde sonore d'amplitude suffisante .

Il est en outre connu qu'un léger écartement entre l'écouteur et l'oreille de l'utilisateur provoque une fuite sonore. L'impédance acoustique vue par le transducteur est alors sensiblement modifiée.

Le téléphone mobile décrit précédemment ne fonctionne qu'en mode discret, c'est-à-dire lorsque l'oreille de l'utilisateur est proche de l'écouteur. Cet appareil présente une forte sensibilité aux variations d'impédance acoustique dues à un léger écartement entre l'oreille et le transducteur. Il est dit non tolérant aux fuites. Lorsque l'utilisateur n'applique pas complètement son oreille sur l'écouteur ou l'en écarte légèrement, la courbe de réponse en fréquence au niveau de l'oreille est fortement modifiée. Ainsi, les basses fréquences perçues par exemple par l'oreille de l'utilisateur sont fortement atténuées en mode discret. La qualité acoustique perçue est alors fortement dégradée. En outre, cet appareil ne présente pas de mode mains libres ou haut-parleur.

Le document EP-A-364 935 décrit un téléphone dans lequel le diaphragme du transducteur de l'écouteur est relié acoustiquement à l'oreille de l'utilisateur par des ouvertures du téléphone. Le côté avant du diaphragme est relié acoustiquement avec le volume intérieur du téléphone.

Les documents DE-2 815 051 et US-A-4 239 745 décrivent des écouteurs présentant une liaison entre le côté avant du diaphragme et le volume à l'arrière du diaphragme.

Le document WO-A-98/24214 décrit un téléphone portable tolérant aux fuites présentant un volume intérieur et un transducteur. Des ouvertures vers l'extérieur sont ménagées du côté avant du diaphragme dont le diaphragme est placé en face d'ouvertures. D'autres ouvertures relient le volume intérieur avec l'extérieur.

Le document WO-A-00/21330 décrit un téléphone mobile présentant un volume d'air important dans son boîtier à l'arrière du transducteur. Cet appareil est dit tolérant aux fuites: la courbe de réponse en fréquence est peu sensible à un léger écartement entre le transducteur et l'oreille. Cependant, les dimensions du volume d'air imposent un boîtier trop volumineux pour un téléphone mobile.

Le document WO-A-00/21330 décrit aussi un téléphone mobile présentant un volume d'air réduit à l'arrière du transducteur, relié à l'air ambiant pour former un circuit acoustique résonant. Cet appareil est tolérant aux fuites. Cependant, ce téléphone présente une bande de fréquence de coupure placée dans le domaine audible. La qualité acoustique perçue est alors dégradée.

Le document WO-A-00/21330 décrit encore un téléphone mobile tolérant aux fuites, présentant une paire de liaisons entre la partie arrière du diaphragme et l'extérieur et une paire de liaisons entre la partie avant du diaphragme et l'extérieur. Parmi chaque paire de liaisons, une liaison débouche dans une zone de contact pour l'oreille de l'utilisateur et une autre liaison débouche sur l'air ambiant à distance de la zone de contact. Cet téléphone combine un volume intérieur réduit et un court-circuit acoustique du aux fuites. Cet appareil présente ainsi une coupure en basses fréquences.

Ces combinés téléphoniques sont tolérants aux fuites en mode discret mais présentent des inconvénients. En effet, aucun de ces appareils ne dispose d'un mode mains libres ou haut parleur, c'est à dire un mode dans lequel l'utilisateur est distant du combiné.

Par ailleurs, le téléphone mobile Alcatel One Touch 300 (marques déposées) présente un mode haut-parleur mais n'est pas tolérant aux fuites en mode discret.

Ainsi aucun de ces appareils ne présente à la fois une bonne tolérance aux fuites en mode discret et un mode mains libres ou haut-parleur.

Un combiné téléphonique présentant les caractéristiques du préambule de la revendication 1 est connu du document EP 0 909 077 mais ne permet pas un fonctionnement en mode également mains-libres.

Il existe donc un besoin pour un combiné téléphonique présentant un mode mains libres et un mode discret tolérant aux fuites.

L'invention concerne ainsi un combiné téléphonique tel que défini dans la revendication 1.

Selon une variante, le transducteur est adapté pour émettre sélectivement un son à une puissance supérieure à 250mW.

Selon encore une variante, le tube présente une longueur supérieure à 3 mm.

Selon une autre variante, le tube présente un axe normal à la paroi sur laquelle il est fixé.

Le combiné téléphonique de l'une des revendications précédentes, caractérisé en ce que la première et la deuxième ouverture sont ménagées dans une même paroi du boîtier et distantes de moins de 25 mm.

Selon encore une autre variante, le combiné présente plusieurs premières ouvertures obturées par la membrane.

On peut également prévoir que la membrane obture de façon étanche la première ouverture.

Selon une variante, le circuit imprimé est logé dans la cavité.

D'autres caractéristiques et avantages de l'invention apparaîtront à la lecture de la description qui suit de modes de réalisation de l'invention donnés à titre d'exemple et en référence aux dessins qui montrent :
- figure 1, une vue en coupe d'un combiné téléphonique selon l'invention;
- figure 2, une vue de dessus du combiné téléphonique selon l'invention;
- figure 3, une courbe de réponse en fréquence en mode haut-parleur d'un combiné selon l'invention comparé à des combinés de l'état de la technique;
- -figure 4, une courbe de réponse en fréquence en mode discret d'un combiné de l'invention, comparant un fonctionnement avec et sans fuites.

La présente invention propose d'amplifier les basses fréquences émises en mode mains libres par un écouteur de combiné téléphonique tolérant aux fuites en mode discret. Elle propose ainsi de placer un tube en saillie dans une cavité du boîtier du combiné, autour d'une ouverture faisant communiquer la cavité et l'extérieur du boîtier.

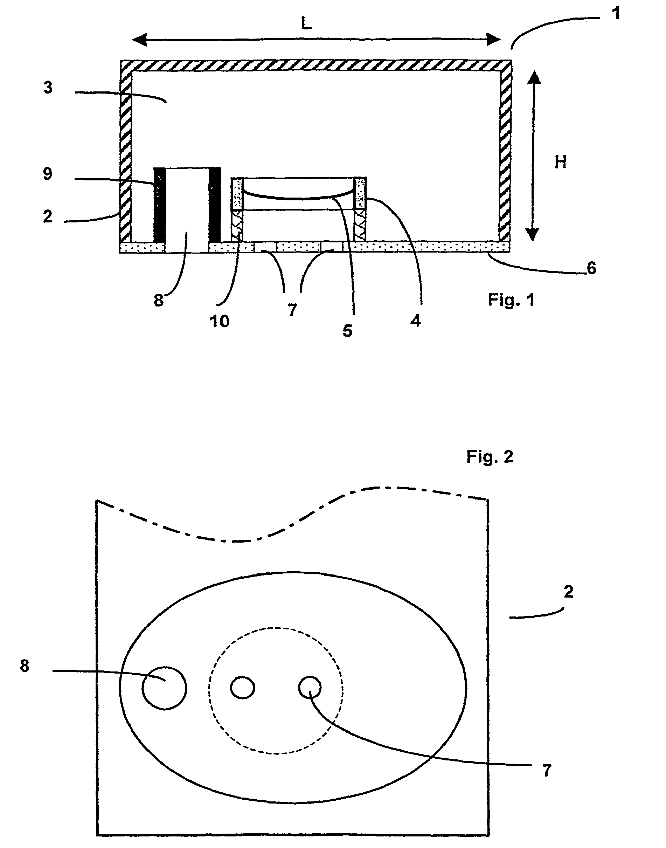

La figure 1 présente une vue en coupe au niveau d'un écouteur d'un combiné téléphonique 1 selon l'invention. Le combiné téléphonique 1 présente un boîtier 2 dans lequel est ménagée une cavité 3. Une première ouverture 7 est ménagée dans une paroi 6 du boîtier 2. Cette première ouverture 7 fait communiquer la cavité et l'extérieur du boîtier. Un transducteur 4 est disposé dans la cavité 3 et solidarisé à la paroi 6. Le transducteur présente une membrane 5 qui obture la première ouverture 7. Une deuxième ouverture 8 est ménagée dans la paroi du boîtier et fait communiquer la cavité 3 avec l'extérieur du boîtier. Un tube 9 fait saillie dans la cavité et une de ses extrémités est fixée à la paroi 6 et entoure la deuxième ouverture 8.

Le transducteur 4 est placé à proximité de la première ouverture 7 pour obtenir une amplitude optimale du signal sonore émis. Le transducteur peut générer des signaux sonores dans la bande de fréquence d'audition humaine, par exemple entre 300 et 3400 Hz.

La cavité 3 et la deuxième ouverture 8 forment un résonateur acoustique. La deuxième ouverture 8 et le tube 9 forment une masse acoustique. On retarde ainsi l'onde sonore de l'arrière de l'écouteur. On obtient alors une résonance par interférence constructive des ondes sonores de l'avant de l'écouteur et des ondes sonores de l'arrière de l'écouteur. La courbe de réponse en fréquence de l'écouteur en mode haut-parleur ou mains-libres présente ainsi une amplification des basses fréquences. On obtient alors un écouteur de type bass reflex ou anti-résonnant en mode mains libres. La courbe de réponse en mode écouteur discret est généralement plate et peu sensible aux fuites, ce qui en fait un écouteur tolérant aux fuites en mode discret, c'est-à-dire que les courbes de réponse varient peu en présence de fuites. Cet écouteur présente ainsi une qualité d'écoute améliorée à la fois en mode discret par sa tolérance aux fuites, et en mode haut-parleur ou mains libres. Un tel écouteur est ainsi réellement multifonctions.

Dans le mode de réalisation représenté, on utilise un tube 9 de forme cylindrique. Cette forme est de fabrication simple et assure une bonne restitution sonore. Le tube 9 présente également de préférence un axe sensiblement normal à la paroi 6 du boîtier. Ce tube peut être réalisé par exemple en polyéthylène. En utilisant un tube de longueur et de diamètre appropriés, on peut déplacer la fréquence de coupure vers le bas du domaine audible. On utilise de préférence un tube d'une longueur supérieure à 3 mm pour amplifier les fréquences basses. On peut également utiliser un tube tel que le rapport entre la hauteur de la cavité H, définie par la suite, et la longueur du tube soit supérieur à 5 pour amplifier les basses fréquences. On peut également utiliser un tube d'une épaisseur supérieure à 0.5mm pour encore amplifier les basses fréquences.

Il est en outre souhaitable de disposer un joint 10 fixant de façon étanche le transducteur 4 à la paroi 6. Il est encore possible d'utiliser la cavité 3 pour y loger un circuit imprimé, non représenté, du téléphone.

Il est par ailleurs possible de réaliser plusieurs ouvertures 7 obturées par la membrane 5. On obtient ainsi un élargissement de la bande passante.

La première ouverture 8 est également située de préférence dans la zone du boîtier prévue pour venir en contact avec l'oreille de l'utilisateur. On ménage préférablement la première ouverture 7 et la deuxième ouverture 8 sur la même paroi, à une distance inférieure à 25 mm. Cette dimension est inférieure à la largeur moyenne d'une oreille humaine et permet donc à un utilisateur de disposer son oreille au-dessus des première et deuxième ouvertures 7 et 8. La qualité sonore perçue par l'utilisateur est améliorée même en mode écouteur discret.

Des essais concluants ont été menés sur un appareil avec un appareil présentant une cavité 3 d'une hauteur H de 10mm, une longueur L de 50 mm, et une profondeur P de 30 mm. On a également utilisé une deuxième ouverture 8 de 3,5 mm de diamètre. On a par ailleurs utilisé pour ces essais un tube 9 faisant saillie de 6 mm dans la cavité 3. Le résonateur ainsi formé présente une fréquence de résonance de l'ordre de 500Hz. Cette fréquence est suffisamment basse pour permettre une bonne restitution sonore en mode mains libres.

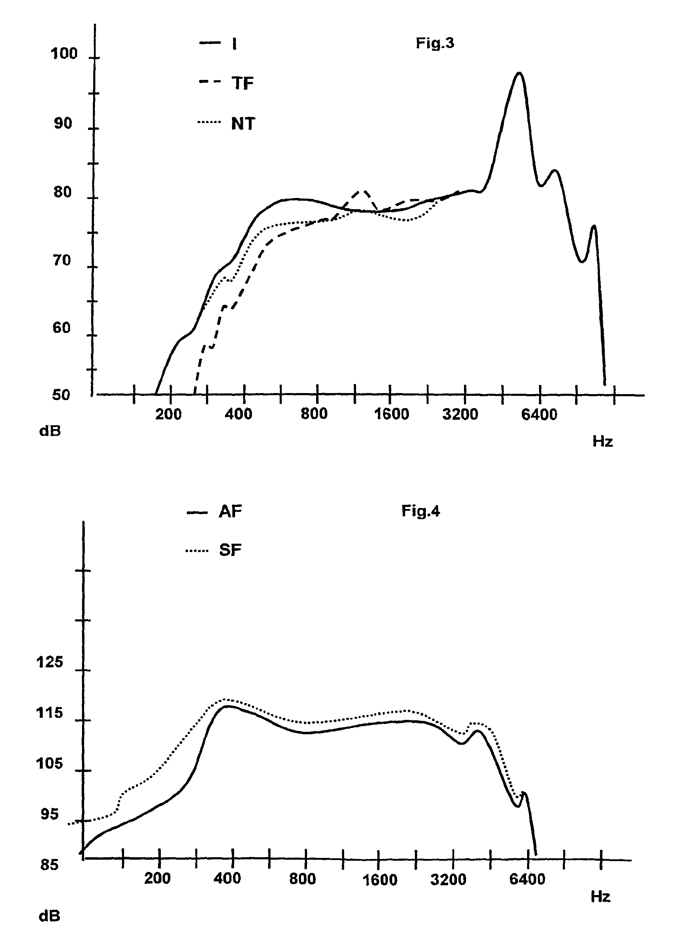

La figure 3 représente une courbe de réponse en fréquence en fonctionnement haut-parleur, de ce combiné, comparé à des combinés de l'état de la technique. La courbe I correspond au combiné de l'invention, la courbe TF correspond à un combiné tolérant aux fuites et la courbe NT correspond à un combiné non tolérant aux fuites. On note une amplification des basses fréquences beaucoup plus importante avec le combiné de l'invention par rapport aux appareils de l'état de la technique.

La figure 4 représente des courbes de réponse en fréquence en fonctionnement discret du combiné de l'invention, avec ou sans fuites. La courbe AF correspond au fonctionnement avec fuites, et la courbe SF correspond au fonctionnement sans fuite. L'influence des fuites sur la réponse en fréquence de l'écouteur est réduite, ce qui est caractéristique d'un écouteur tolérant aux fuites en mode discret.

Les présents modes de réalisation et exemples doivent être considérés comme ayant été présentés à titre illustratif et non restrictif et l'invention n'est pas censée être limilée aux détails fournis ici mais peut être modifiée en restant dans le cadre de la portée des revendications annexées. Il est par exemple possible, toujours dans le cadre de l'invention, d'utiliser un tube de section carrée ou de réaliser plusieurs ouvertures 8 dans le boîtier du téléphone.

## Revendications

1. Combiné téléphonique (1) comprenant:
- un boîtier (2);
- une cavité (3) ménagée dans le boîtier (2);
- une première ouverture (7) dans une paroi du boîtier (2) faisant communiquer la cavité (3) avec l'extérieur du boîtier;
- un transducteur (4) dont la membrane obture la première ouverture (7) pour permettre le fonctionnement du combiné en un mode discret dans lequel un utilisateur place la première ouverture adjacente ou en contact avec son oreille;
**caractérisé en ce que** le transducteur (2) est un transducteur multifonctions adapté pour permettre également un fonctionnement du combiné en mode mains-libres, et **en ce que** le combiné téléphonique comporte en outre pour le fonctionnement en mode mains-libres :
- une deuxième ouverture (8) dans une paroi du boîtier faisant communiquer directement la cavité (2) avec l'extérieur du boîtier;
- un tube (9) en saillie dans la cavité dont une extrémité est fixée à la paroi du boîtier et entoure la deuxième ouverture (8),
la cavité (2) formant, avec la deuxième ouverture (8), un résonateur acoustique, et le tube (9) formant, avec la deuxième ouverture (8) une masse acoustique retardant l'onde sonore de l'arrière de l'écouteur

2. Le combiné téléphonique de la revendication 1, **caractérisé en ce que** le transducteur est adapté pour émettre sélectivement un son à une puissance supérieure à 250mW.

3. Le combiné téléphonique de la revendication 1 ou 2, **caractérisé en ce que** le tube présente une longueur supérieure à 3 mm.

4. Le combiné téléphonique de l'une des revendications 1 à 3, **caractérisé en ce que** le tube présente un axe normal à la paroi sur laquelle il est fixé.

5. Le combiné téléphonique de l'une des revendications précédentes, **caractérisé en ce que** la première et la deuxième ouverture sont ménagées dans une même paroi du boîtier et distantes de moins de 25 mm.

6. Le combiné téléphonique de l'une des revendications précédentes, **caractérisé en ce qu'**il présente plusieurs premières ouvertures (7) obturées par la membrane (5).

7. Le combiné téléphonique de l'une des revendications précédentes, **caractérisé en ce que** la membrane obture de façon étanche la première ouverture (7).

8. Le combiné téléphonique de l'une des revendications précédentes, **caractérisé en ce qu'**un circuit imprimé est logé dans la cavité.

## Claims

1. A telephone handset (1) comprising:
- a case (2);
- a cavity (3) arranged inside the case (2);
- a first opening (7) in the wall of the case (2) communicating the cavity (3) with the outside of the case;
- a transducer (4), the membrane of which closes the first opening (7) in order to enable operation of the telephone handset in a discrete mode, in which a user places the first opening next to or in touch with his or her ear;
**characterized in that** the transducer (2) is a multifunctional transducer adapted to also enable operation of the telephone handset in handsfree mode, and that the telephone handset further comprises for operating in handsfree mode:
- a second opening (8) in a wall of the case directly communicating the cavity (2) with the outside of the case;
- a tube (9) protruding into the cavity, the end of which is fixed to the wall of the case and encloses the second opening (8),
with the cavity (2) forming together with the second opening (8) an acoustic resonator, and the tube (9) forming together with the second opening (8) an acoustic mass delaying the sound wave from behind the earphone.

2. The telephone handset according to claim 1, **characterized in that** the transducer is adapted to selectively emit sound at a power of more than 250 mW.

3. The telephone handset according to claim 1 or 2, **characterized in that** the tube has a length of more than 3 mm.

4. The telephone handset according to any of claims 1 to 3, **characterized in that** the tube has an axis normal to the wall to which it is fixed.

5. The telephone handset according to any of the preceding claims, **characterized in that** the first and second openings are arranged in the same wall of the case and spaced apart by less than 25 mm.

6. The telephone handset according to any of the preceding claims, **characterized in that** it has several first openings (7) sealed by the membrane (5).

7. The telephone handset according to any of the preceding claims, **characterized in that** the membrane sealingly closes the first opening (7).

8. The telephone handset according to any of the preceding claims, **characterized in that** a printed circuit is received in the cavity.

## Patentansprüche

1. Telefonhandapparat (1), umfassend:
- ein Gehäuse (2);
- einen Hohlraum (3), der in dem Gehäuse (2) eingerichtet ist;
- eine erste Öffnung (7) in der Wand des Gehäuses (2), die den Hohlraum (3) mit dem Äußeren des Gehäuses verbindet;
- einen Wandler (4), dessen Membrane die erste Öffnung (7) schließt, um den Betrieb des Telefonhandapparats in einem diskreten Modus zu ermöglichen, in dem ein Benutzer die erste Öffnung an oder in Kontakt mit seinem Ohr hält;
**dadurch gekennzeichnet, dass** der Wandler (2) ein Multifunktionswandler ist, der dazu geeignet ist, auch den Betrieb des Telefonhandapparats im freihändigen Modus zu ermöglichen, und dass der Telefonhandapparat ferner zum Betrieb im freihändigen Modus folgendes umfasst:
- eine zweite Öffnung (8) in einer Wand des Gehäuses, die den Hohlraum (2) direkt mit dem Äußeren des Gehäuses verbindet;
- eine Röhre (9), die in den Hohlraum hineinragt, deren Ende an der Wand des Gehäuses befestigt ist und die zweite Öffnung (8) umgibt,
wobei der Hohlraum (2) mit der zweiten Öffnung (8) einen Schallresonator bildet und die Röhre (9) mit der zweiten Öffnung (8) eine akustische Masse bildet, welche die Schallwelle von der Rückseite des Ohrstücks verzögert.

2. Telefonhandapparat nach Anspruch 1, **dadurch gekennzeichnet, dass** der Wandler dazu geeignet ist, selektiv Schall mit einer Leistung von mehr als 250 mW auszusenden.

3. Telefonhandapparat nach Anspruch 1 oder 2, **dadurch gekennzeichnet, dass** die Röhre eine Länge von mehr als 3 mm aufweist.

4. Telefonhandapparat nach einem der Ansprüche 1 bis 3, **dadurch gekennzeichnet, dass** die Röhre eine Achse aufweist, die zur Wand, an der sie befestigt ist, senkrecht steht.

5. Telefonhandapparat nach einem der vorhergehenden Ansprüche, **dadurch gekennzeichnet, dass** die erste und zweite Öffnung in derselben Wand des Gehäuses angeordnet und um weniger als 25 mm voneinander entfernt sind.

6. Telefonhandapparat nach einem der vorhergehenden Ansprüche, **dadurch gekennzeichnet, dass** er mehrere erste Öffnungen (7) aufweist, die durch die Membrane (5) verschlossen werden.

7. Telefonhandapparat nach einem der vorhergehenden Ansprüche, **dadurch gekennzeichnet, dass** die Membrane die erste Öffnung (7) dicht verschließt.

8. Telefonhandapparat nach einem der vorhergehenden Ansprüche, **dadurch gekennzeichnet, dass** eine gedruckte Schaltung in dem Hohlraum aufgenommen wird.
